# EUROPEAN PATENT APPLICATION

(11) **EP 4 364 565 A1**
(43) Date of publication of application: **08.05.2024**
(21) Application number: 23207686.9
(22) Date of filing: 03.11.2023
(51) Int. Cl.: A01M 29/10, A01M 29/16, G06V 20/58

(54) **ANIMAL DETECTION AND REPELLING FOR AUTOMATED DRIVING SYSTEMS**

(30) Priority: 06.11.2022 US 202217981458
(71) Applicant: NXP B.V., 5656 AG Eindhoven (NL)
(72) Inventor: Fu, Yuting, 5656AG Eindhoven (NL); Terechko, Andrei Sergeevich, 5656AG Eindhoven (NL); Seemann, Jochen, 5656AG Eindhoven (NL)
(74) Representative: Miles, John Richard

(57) **Abstract**

A method for animal detection and repelling includes detecting a plurality of animal characteristics of an animal, the animal characteristics comprising at least an animal size and an animal position. A species of the animal is determined from a bioinformatics database, wherein the bioinformatics database receives the animal size and the animal position. An animal deterrent specific to the species is determined from the bioinformatics database. A repelling signal is generated based on the animal deterrent.

## Description

### FIELD

This disclosure relates generally to automated driving systems, and more specifically to the detection and repelling of animals that may collide with a vehicle controlled by an automated driving system.

### BACKGROUND

Animals such as deer, moose, and horses crossing the road are unpredictable and highly dangerous for both the animals and the vehicles. Especially, wild animals are often blended into or disguised by the natural environment, thus harder to be detected than ordinary objects on the road. Commercially available vehicle-mounted physical whistles are cheap but proved to be ineffective due to inaccurate timing and sound, and electronic large animal detection systems have limited functions and often require human reaction.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a functional block view of an animal detection and repelling system, in accordance with an embodiment of the present disclosure.
FIG. 2 is a functional block view of an animal detection and repelling system, in accordance with another embodiment of the present disclosure.
FIG. 3 is a flowchart representation of a method for animal detection and repelling for an automated driving system, in accordance with an embodiment of the present disclosure.
FIG. 4 is a flowchart representation of another method for animal detection and repelling for an automated driving system, in accordance with an embodiment of the present disclosure.

### DETAILED DESCRIPTION

Embodiments described herein provide for automatic detection and repelling of animals that may collide or otherwise interfere with a vehicle controlled with an automated driving system. Often, an automated driving system's response time is insufficient to avoid hitting an animal, particularly since wild animals do not often appear on the road and may have behaviors that are hard for an automated driving system to predict. The term "vehicle" as used throughout this disclosure should be interpreted to include an apparatus that may provide a repelling signal and be capable of following and altering an intended path. For example, a "vehicle" may include without limit an automotive sedan, truck, an all-terrain vehicle, a motorcycle and a drone.

A threat of a vehicle colliding with an animal may be identified by detecting, for example, the size, shape or position of an animal using various sensors on a vehicle. In particular, a vehicle controlled by an Automated Driving System (ADS) may use a combination of optical cameras, infrared cameras, microwave-based Radar or Light Detection And Ranging (LiDAR) to detect various road features for autonomous vehicle control. These sensors may also be used to detect a threat of collision with an animal. A Perception module may also be used in combination with these sensors to determine an animal species (e.g., by pattern matching an animal shape or movement behavior). A bioinformatics database may use the information discerned by the Perception module to determine a species of the animal and to direct an animal detection module to use a repelling signal tailored to the species. In one embodiment, the repelling signal is an auditory signal optimized with appropriate pitch and volume to specifically target the threat. In another embodiment, the repelling signal is a focused beam of light from a matrix headlight. In another embodiment, an intensity of the matrix headlight may be modulated (e.g., flashed) to alert or deter the animal. It should be understood that the term "animal" as used throughout the disclosure, but may also include a mammal, a bird or any species capable of responding to an auditory or visual repelling signal. A "species" of an animal may also be referred to as a "classification" of an animal. Furthermore, detection of an animal size and animal position may be supplemented by detecting a shape of the animal, or a camera image of the animal.

The animal detection module may also be used in conjunction with the bioinformatics database and a prediction module, to determine a likely trajectory of the animal and thus an evasive path of the vehicle to further prevent a collision. While the repelling signal may avoid the necessity of the vehicle having to take an evasive path, in one embodiment, the vehicle may both transmit the repelling signal and follow the evasive path specific to the detected animal species. In another embodiment, the effectivity of the repelling signal may be determined (e.g., by sensing the animal's movement or response), and the vehicle is further controlled to brake or follow the evasive path in the event that the repelling signal is not sufficiently effective at removing the threat of collision.

The bioinformatics database may also be adaptively updated to continuously improve the effectiveness of repelling signals and evasive paths based on a learned response from the resulting animal behavior. Furthermore, the bioinformatics database may adaptively exchange data with a fleet database, shared with other vehicles in a same Region Of Interest (ROI), where the ROI may be determined by a georeferenced maps database and the Global Positioning System (GPS) coordinates of the vehicle or animal.

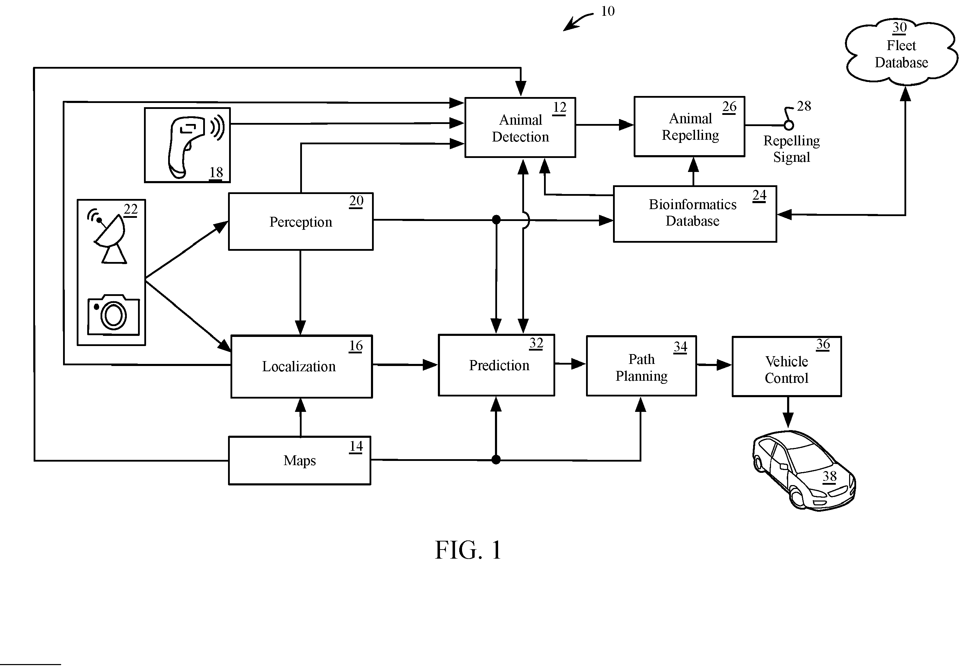

FIG. 1 shows an embodiment 10 of an animal detection and repelling system. The embodiment 10 includes an animal detection module 12 configured to receive inputs from a maps database 14, a localization module 16, sensors 18 and the perception module 20. The localization module 16 and the perception module 20 each receive inputs from additional sensors 22, including optical cameras and a GPS. The term "module" as used throughout this disclosure may include a hardware implementation, a software implementation, a firmware implementation or an implementation based on any combination of hardware, software and firmware.

In one embodiment, the localization module 16 determines a GPS position of a vehicle 38 from GPS receiver included in the sensors 22. The maps database 14 communicates with the localization module 16 to provide a georeferenced map to the animal detection module 12. In one embodiment, additional factors, such as vehicle speed and the like may be used to define an ROI from the georeferenced map. In one embodiment, the perception module 20 uses one or more ranging devices (e.g., Radar, or LiDAR) and optical or infrared cameras to determine a location and distance of an animal relative to a position of the vehicle 38, and subsequently communicates this information to the animal detection module 12. In one embodiment, the animal detection module 12 receives public infrastructure data from the sensors 18. For example, the public infrastructure may include without limitation, a sign warning of frequent Elk crossing or migration, where the sign is detected by optical recognition and pattern matching by a sensor 18. The public infrastructure may also include an electronic beacon warning of an area known to have frequent animal activity. The beacon may further encode a type of animal or a time or date window during which animal activity may be expected. Sensor 18 may also be a dedicated animal detection sensor, such as an infrared camera, which can effectively identify warm-blooded animals in the dark.

A species of the animal may be determined from the perception module 20 and communicated to a bioinformatics database 24. The bioinformatics database 24 by use the determined species of the animal to determine a deterrent request, which is then sent to an animal repelling module 26. The animal repelling module 26 then transmits a repelling signal 28 to either alert the animal or cause it to run away or change course to avoid a collision with the vehicle 38. In one embodiment, the repelling signal 28 is an auditory signal (e.g., a high pitch whistle) within the hearing range of the species of animal. In another embodiment, the repelling signal 28 mimics an auditory sound make by a predator of the animal. In another embodiment, the repelling signal 28 alters a focal point of a matrix headlight to coincide with a position of the animal. In another embodiment, the repelling signal 28 both emits an auditory signal and alters a focal point of a matrix headlight. In another embodiment, the repelling module may be deactivated, for example during a safari trip in a zoo, when there is a pet in the car or when towing an animal (e.g., a horse) in a trailer. In one embodiment, the repelling signal 28 is only active while the vehicle is within the ROI.

The animal detection module 12, the maps database 14, the localization module 16 and the perception module 20 further communicate with the prediction module 32 to predict a trajectory of the animal. The trajectory may then be used by a path planning module 34, in conjunction with the maps database 14, or a georeferenced maps database, to determine an evasive path to prevent the vehicle 38 from colliding with the animal. The evasive path is communicated by the path planning module 34 to a vehicle control module 36, which may cause the vehicle to brake, to alter a vehicle path to follow the evasive path, or to both brake and alter the path of the vehicle. In many cases, the repelling signal 28 is sufficient to avoid a collision without the need for the vehicle to alter course. However, in some embodiments, the perception module 20 may determine that the repelling signal 28 will not be sufficient to avoid a collision and will cause the vehicle 38 to alter course as an additional safety measure. In one embodiment, the evasive path is followed when the animal repelling module 26 is deactivated. In another embodiment, the repelling signal 28 will default to an auditory signal if the headlights are turned off.

In some embodiments, a fleet database 30 accessible by other vehicles, may adaptively exchange data with the bioinformatics database 24. The fleet database 30 may be accessible by the vehicle 38 through an Over-The-Air (OTA) update by satellite, cellular or other wireless telematics communication link. Information learned by the embodiment 10, such as the accuracy of the predicted trajectory of the animal, the effectiveness of the evasive path, or the effectiveness of the repelling signal may be shared with the fleet database 30 to improve accuracy and effectiveness of the animal detection and repelling system during future encounters with animals. In one embodiment, the bioinformatics database 24 may also be improved through the experiences and adaptive learning from other vehicles communicating with the fleet database 30.

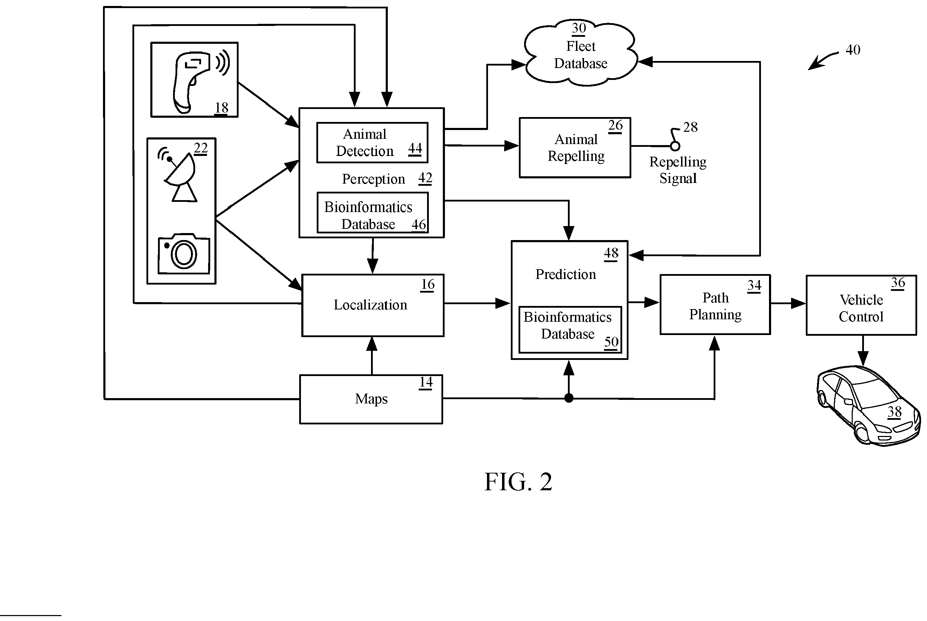

FIG. 2 with continued reference to FIG. 1 shows another embodiment 40 of an animal detection and repelling system. The embodiment 40 integrates the bioinformatics database 24 into the perception module 20 and prediction module 32. Specifically, the embodiment 40 includes a perception module 42 with an integrated animal detection module 44 and a bioinformatics database 46. The embodiment 40 further includes a prediction module 48 with an integrated bioinformatics database 50. The perception module 42 and the prediction module 48 both adaptively exchange and share information with the fleet database 30, in a similar manner to the embodiment 10 of FIG. 1. In one embodiment, the bioinformatics databases 46 and 50 are the same. In another embodiment, the bioinformatics databases 46 and 50 are different.

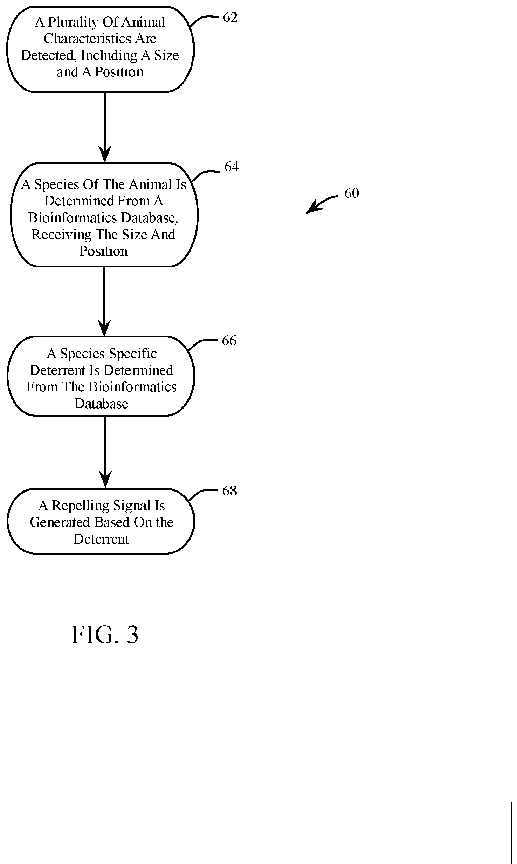

FIG. 3 shows an embodiment 60 of a method for animal detection and repelling. With reference to FIG. 1 and FIG. 3, at 62 a plurality of animal characteristics are detected (e.g., with the sensors 18 and the perception module 20), including a size and position. At 64, a species of the animal is determined from a bioinformatics database 24, receiving the size and position, (from the perception module 20). At 66, a species-specific deterrent is determined from the bioinformatics database 24. At 68, a repelling signal 28 is generated based on the deterrent.

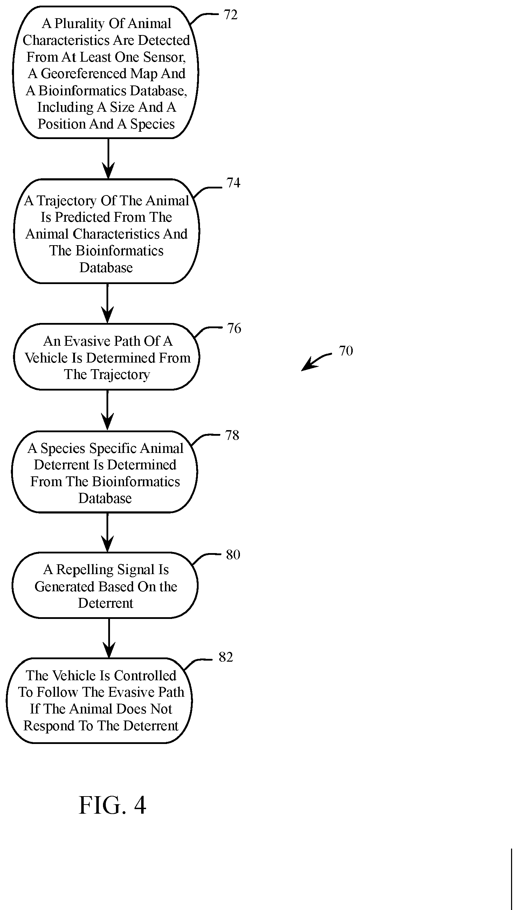

FIG. 4 shows an embodiment 70 of another method for animal detection and repelling. With reference to FIG. 1 and FIG. 4, at 72 a plurality of animal characteristics are detected from at least one sensor 18, a georeferenced map (derived from 14 and 22), and a bioinformatics database 24. At 74, a trajectory of the animal is predicted, (by the prediction module 32), from the animal characteristics and the bioinformatics database 24. At 76, an evasive path of a vehicle 38 is determined from the trajectory. At 78, a species-specific animal deterrent is determined from the bioinformatics database 24. At 80, a repelling signal 28 is generated based on the deterrent. At 82, the vehicle is controlled (by the vehicle control module 36), to follow the evasive path if the animal does not respond to the deterrent.

As will be appreciated, at least some of the embodiments as disclosed include at least the following. In one embodiment, a method for animal detection and repelling comprises detecting a plurality of animal characteristics of an animal, the animal characteristics comprising at least an animal size and an animal position. A species of the animal is determined from a bioinformatics database, wherein the bioinformatics database receives the animal size and the animal position. An animal deterrent specific to the species is determined from the bioinformatics database. A repelling signal is generated based on the animal deterrent.

Alternative embodiments of the method for animal detection and repelling include one of the following features, or any combination thereof. A trajectory of the animal is predicted from the plurality of animal characteristics. The repelling signal is generated within a Region Of Interest (ROI). The ROI is determined by the animal position, the trajectory and a georeferenced maps database. Data is adaptively exchanged between the bioinformatics database and a fleet database, wherein the fleet database is accessible by a plurality of vehicles. The repelling signal comprises steering a focal point of a matrix headlight to coincide with the animal position. An intensity of the matrix headlight is modulated. The repelling signal comprises an auditory signal within a hearing range of the species of the animal. The auditory signal mimics a predator of the species of the animal. The repelling signal is selectably deactivated.

In another embodiment, an apparatus comprises an animal detection module configured to receive a map data, a localization data, a sensor data and a perception data, and to generate a deterrent request based on a detection of an animal predicted to intersect a path of a vehicle. A bioinformatics database is configured to receive the perception data, and to identify a species of the animal. An animal repelling module is configured to receive a deterrent request from the animal detection module, and to generate a repelling signal specific to the species.

Alternative embodiments of the apparatus include one of the following features, or any combination thereof. The bioinformatics database is coupled to a fleet database accessible by a plurality of vehicles, and the bioinformatics database is configured to adaptively exchange data with the fleet database. The perception module is coupled to at least one of an optical camera, and infrared camera, a microwave-based ranging system and a light-based ranging system, and is configured to generate the perception data comprising a size and a location of the animal. A prediction module is configured to predict a trajectory of the animal relative to a position of the vehicle. The maps data is coupled to the localization data and a global positioning system to provide a georeferenced position of the animal.

In another embodiment, a method for animal detection and repelling comprises detecting a plurality of animal characteristics of an animal from at least one sensor, a georeferenced maps database and a bioinformatics database, wherein the animal characteristics comprises at least an animal size, and animal position and an animal species. A trajectory of the animal relative to a vehicle is predicted from the animal characteristics and the bioinformatics database. An evasive path of the vehicle is determined from the trajectory. An animal deterrent specific to the species is determined from the bioinformatics database. A repelling signal is generated based on the animal deterrent. The vehicle is controlled to follow the evasive path in response to the animal not responding to the animal deterrent thereby avoiding contact between the animal and the vehicle.

Alternative embodiments of the method for animal detection and repelling include one of the following features, or any combination thereof. Controlling the vehicle further comprises a braking action of the vehicle. A learned data is adaptively exchanged between the bioinformatics database and a fleet database, wherein the fleet database is accessible by a plurality of vehicles, the learned data determined from a response of the animal to the animal deterrent. A learned data is adaptively exchanged between the bioinformatics database and a fleet database, wherein the fleet database is accessible by a plurality of vehicles, the learned data determined from an effectiveness of the evasive path. The at least one sensor comprises at least one of an optical camera, an infrared camera, a microwave-based ranging system, a light-based ranging system, and a public infrastructure device.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for animal detection and repelling comprising:
detecting a plurality of animal characteristics of an animal, the animal characteristics comprising at least an animal size and an animal position;
determining a species of the animal from a bioinformatics database, wherein the bioinformatics database receives the animal size and the animal position;
determining from the bioinformatics database an animal deterrent specific to the species; and
generating a repelling signal based on the animal deterrent.

2. The method of claim 1 further comprising predicting a trajectory of the animal from the plurality of animal characteristics.

3. The method of any preceding claim wherein the repelling signal is generated within a Region Of Interest (ROI).

4. The method of claim 3 wherein the ROI is determined by the animal position, the trajectory and a georeferenced maps database.

5. The method of any preceding claim further comprising adaptively exchanging data between the bioinformatics database and a fleet database, wherein the fleet database is accessible by a plurality of vehicles.

6. The method of any preceding claim wherein the repelling signal comprises steering a focal point of a matrix headlight to coincide with the animal position.

7. The method of any preceding claim further comprising modulating an intensity of the matrix headlight.

8. The method of any preceding claim wherein the repelling signal comprises an auditory signal within a hearing range of the species of the animal.

9. The method of claim 8 wherein the auditory signal mimics a predator of the species of the animal.

10. The method of claim 8 or 9 wherein the repelling signal is selectably deactivated.

11. An apparatus comprising:
an animal detection module configured to receive a map data, a localization data, a sensor data and a perception data, and to generate a deterrent request based on a detection of an animal predicted to intersect a path of a vehicle;
a bioinformatics database configured to receive the perception data, and to identify a species of the animal; and
an animal repelling module configured to receive a deterrent request from the animal detection module, and to generate a repelling signal specific to the species.

12. The apparatus of claim 11 wherein the bioinformatics database is coupled to a fleet database accessible by a plurality of vehicles, and the bioinformatics database is configured to adaptively exchange data with the fleet database.

13. The apparatus of claim 11 or 12 wherein the perception module is coupled to at least one of an optical camera, and infrared camera, a microwave-based ranging system and a light-based ranging system, and is configured to generate the perception data comprising a size and a location of the animal.

14. The apparatus of any of claims 11 to 13 further comprising a prediction module configured to predict a trajectory of the animal relative to a position of the vehicle.

15. The apparatus of any of claims 11 to 14 wherein the maps data is coupled to the localization data and a global positioning system to provide a georeferenced position of the animal.
